# EUROPÄISCHE PATENTANMELDUNG

(11) **EP 4 614 035 A1**
(43) Veröffentlichungstag der Anmeldung: **10.09.2025**
(21) Anmeldenummer: 25153374.1
(22) Anmeldetag: 22.01.2025
(51) Int. Cl.: F16K 1/12, F16K 27/02, F16K 31/52, F16K 47/08

(54) **RINGKOLBENVENTIL**

(30) Priorität: 06.03.2024 DE 102024106400
(71) Anmelder: VAG GmbH, 68305 Mannheim (DE)
(72) Erfinder: Herold, Heribert Erich, 68259 Mannheim (DE); Corrado, Francesco Giuseppe, 67157 Wachenheim (DE)
(74) Vertreter: Charrier Rapp & Liebau

(57) **Zusammenfassung**

Die Erfindung betrifft ein Ringkolbenventil mit einem Gehäuse (1), einem zwischen einem Außenteil (3) und einem inneren Führungsteil (5) des Gehäuses (1) gebildeten Ringkanal (8) zur Führung eines Mediums zwischen einer Einlassöffnung (9) und einer Auslassöffnung (10) des Gehäuses (1), einem innerhalb des inneren Führungsteils (5) des Gehäuses (1) axial verschiebbar geführten Abschlusskolben (15) und einer mittels einer Antriebswelle von der Außenseite des Gehäuses (1) betätigbaren Stelleinrichtung, über die der Abschlusskolben (15) durch Drehung der Antriebswelle zwischen einer Öffnungsstellung und einer Schließstellung axial bewegbar ist. Erfindungsgemäß sind an der Auslassöffnung (10) des Gehäuses (1) Turbulatoren (32, 33) zur Verwirbelung des durch die Auslassöffnung (10) ausströmenden Mediums angeordnet.

## Beschreibung

Die Erfindung betrifft ein Ringkolbenventil nach dem Oberbegriff des Anspruchs 1.

Ein derartiges Ringkolbenventil ist aus der DE 20 2012 003 033 U1 bekannt. Dieses Ringkolbenventil enthält ein Gehäuse mit einem zwischen einem Außenteil und einem inneren Führungsteil des Gehäuses gebildeten Ringkanal, durch den Wasser oder ein anderes Medium zwischen einer Einlassöffnung und einer Auslassöffnung des Gehäuses strömen kann. In dem inneren Führungsteil des Gehäuses ist ein den Durchlass durch den Ringkanal steuernder Abschlusskolben axial verschiebbar geführt. Die Führung des Abschlusskolbens erfolgt über an der Außenseite des Abschlusskolbens anliegende Kolbenführungsleisten, die an der Innenseite des inneren Führungsteils entweder angeschweißt oder angeschraubt sind. Durch eine mittels einer Antriebswelle von der Außenseite des Gehäuses betätigbare Stelleinrichtung ist der Abschlusskolben zwischen einer Schließstellung und einer Öffnungsstellung axial verschiebbar. Die Stelleinrichtung zur axialen Verstellung des Abschlusskolbens ist bei diesem bekannten Ringkolbenventil als Kurbelantrieb mit einer auf der Antriebswelle befestigten Antriebskurbel und einer mit der Antriebskurbel und dem Abschlusskolben gelenkig verbundenen Pleuelstange ausgeführt.

Bei den bekannten Ringkolbenventilen der genannten Art ist das Gehäuse in der Regel derart ausgestaltet, dass eine gerichtete und gerade verlaufende Strömung vom Ventileingang zum Ventilausgang erreicht werden kann. Beim Zusammenführen der Strömung am Ventilausgang entsteht jedoch aufgrund der Geometrie des Ventilsitzes und der Gestaltung des Ventilauslasses eine Strahlkontraktion, die zu Geräuschbildung und Kavitation führen kann.

Aufgabe der Erfindung ist es, ein Ringkolbenventil der eingangs genannten Art zu schaffen, das eine verbesserte Strömungsführung aufweist.

Diese Aufgabe wird durch ein Ringkolbenventil mit den Merkmalen des Anspruchs 1 gelöst. Zweckmäßige Ausgestaltungen und vorteilhafte Weiterbildungen der Erfindung sind in den Unteransprüchen angegeben.

Bei dem erfindungsgemäßen Ringkolbenventil sind an der Auslassöffnung des Gehäuses Turbulatoren zur Verwirbelung des durch die Auslassöffnung ausströmenden Mediums angeordnet. Durch die Turbulatoren, bei denen es sich um bewusst erzeugte Veränderungen der Oberfläche handelt, kann die Ausbildung des Strömungsprofils verbessert werden. Die Turbulatoren erzeugen Wirbel, die der Strömung kinetische Energie zuführen und die Strömungsablösung am Ventilsitz verringern. Außerdem erzeugen die Turbulatoren eine Wirbelschleppe, die eine Umlenkung des Mediums vom Gehäuse zur Rohrleitung erleichtert und die Schallentwicklung reduziert.

Die an der Auslassöffnung des Gehäuses angeordneten Turbulatoren können z.B. entweder an der Innenseite des Gehäuses im Bereich der Auslassöffnung oder an der Innenseite eines an der Auslassöffnung des Gehäuses angeordneten Sitzrings angeordnet sein. Die Turbulatoren können aber auch sowohl an dem Gehäuse als auch an einem an der Auslassöffnung des Gehäuses angeordneten Sitzrings angeordnet sein. Dadurch kann die Strömung am Übergang zur Auslassöffnung des Gehäuses besonders effektiv gesteuert werden.

In einer weiteren vorteilhaften Ausgestaltung können an der Außenseite des inneren Führungsteils des Gehäuses weitere Turbulatoren zur Verwirbelung des durch den Ringkanal strömenden Mediums angeordnet sein. Dadurch ist eine weitere Verbesserung des Strömungsprofils erreichbar.

Auch die an der Außenseite des inneren Führungsteils des Gehäuses angeordneten weiteren Turbulatoren können als Erhöhungen oder Vertiefungen ausgebildet sein. Die Erhöhungen oder Vertiefungen können z.B. kugel- bzw. linsenförmig ausgebildet sein. Ihre Höhe bzw. Tiefe sollte vorzugsweise 1% bis 20% der Höhe des Ringkanals betragen.

Die Turbulatoren können aber auch als Stege oder Nuten mit einem zur Längsachse des Gehäuses parallelen oder demgegenüber geneigten Verlauf ausgeführt sein. Auch andere Ausgestaltungen der Turbulatoren sind möglich.

Die Turbulatoren können gleichmäßig oder ungleichmäßig über den Umfang des inneren Führungsteils verteilt sein. Sie können in einer oder mehreren Reihen angeordnet sein.

In einer besonders vorteilhaften Ausführung ist der Abschlusskolben über ein hülsenförmiges Führungselement auf einer zentralen Führungsstange axial verschiebbar geführt. Die Stelleinrichtung zur Umwandlung der Drehbewegung der Antriebswelle in eine Axialbewegung des Abschlusskolbens kann durch ein verdrehgesichert mit der Antriebswelle verbundenes kurbelförmiges Stellelement und einen im hülsenförmigen Führungselement angeordneten Verbindungszapfen gebildet sein, der in einem Langloch oder einer einseitig offenen Längsnut des kurbelförmiges Stellelements verschiebbar geführt ist.

Das hülsenförmige Führungselement ist vorzugsweise über ein vorderes und hinteres Gleitlager auf der zentralen Führungsachse verschiebbar geführt. Dadurch kann eine kippsichere und lange Führung des Abschlusskolbens erreicht werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein Ringkolbenventil in einer Perspektivansicht mit zum Teil aufgeschnittenem Gehäuse;
- **Figur 2**: das Ringkolbenventil von Figur 1 in einem Längsschnitt;
- **Figur 3**: ein Ringkolbenventil mit einer alternativen Stelleinrichtung in einem Querschnitt entlang einer Mittelachse einer Antriebswelle;
- **Figur 4**: das Ringkolbenventil von Figur 1 mit abgeschnittenen hinteren Gehäuseteil in einer Perspektivansicht;
- **Figur 5**: einen Sitzring mit Turbulatoren in einer Perspektive und
- **Figur 6**: den Sitzring von Figur 5 in einer Schnittansicht.

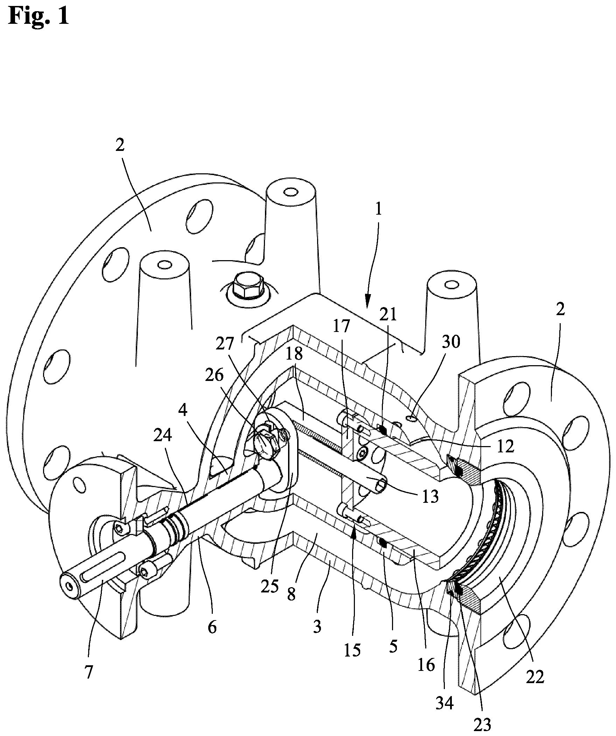

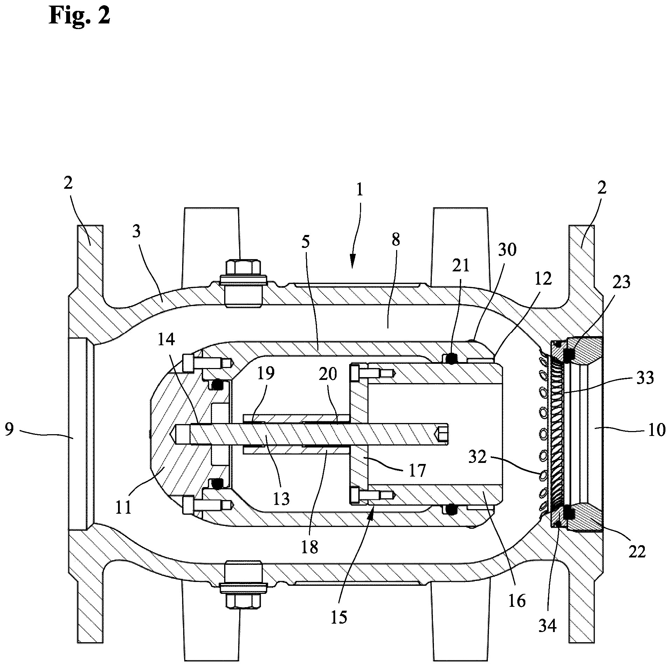

In den Figuren 1 und 2 ist ein z.B. zur Regelung von Durchflüssen und zum Abbauen von Drücken hauptsächlich in Wassergewinnungsanlagen verwendetes Ringkolbenventil in einer Perspektive und einem Querschnitt dargestellt. Das in Figur 1 in einer Perspektive zum Teil geschnitten dargestellte Ringkolbenventil enthält ein vorzugsweise aus duktilem Gusseisen bestehendes Gehäuse 1, das einen mit Anschlussflanschen 2 versehenen Außenteil 3 und einen über Halterippen 4 an der Innenseite des Außenteils 3 abgestützten inneren Führungsteil 5 aufweist. Das Gehäuse 1 enthält außerdem einen seitlich vorstehenden Antriebsflansch 6, in dem eine Antriebswelle 7 eines im Folgenden noch näher erläuterten Betätigungsmechanismus drehbar gelagert ist.

Wie aus Figur 2 hervorgeht, wird zwischen dem Außenteil 3 und dem inneren Führungssteil 5 des Gehäuses 1 ein Ringkanal 8 begrenzt, durch welchen vorzugsweise Wasser oder ein anderes Medium von einer Einlassöffnung 9 zu einer Auslassöffnung 10 des Gehäuses 1 strömen kann. Das zur Auslassöffnung 10 hin offene innere Führungsteil 5 des Gehäuses 1 ist an der zur Einlassöffnung 9 weisenden Seite durch ein deckelförmiges Verschlussteil 11 geschlossen. In dem am Führungsteil 5 lösbar befestigten deckelförmigen Verschlussteil 11 ist eine zentrale Führungsachse 13 befestigt, die nahezu bis zu dem der Auslassöffnung 10 des Gehäuses 1 zugewandten offenen Ende 12 des inneren Führungsteils 5 reicht. Diese Führungsachse 13 ist über ein Gewinde 14 in das deckelförmige Verschlussteil 11 eingeschraubt.

In Figur 2 ist auch erkennbar, dass in dem zur Auslassöffnung 10 des Gehäuses 1 hin offenen inneren Führungsteil 5 des Gehäuses 1 ein Abschlusskolben 15 axial verschiebbar geführt ist. Durch die axiale Verschiebung des Abschlusskolbens 15 kann der Durchlass durch den Ringkanal 8 gesteuert werden. Der Abschlusskolben 15 enthält in der gezeigten Ausführung eine Abschlussbuchse 16, ein scheibenförmiges Abschlussteil 17 und ein hülsenförmiges Führungselement 18. Durch das hülsenförmige Führungselement 18 ist der Abschlusskolben 15 über hier als Gleitlager ausgebildete vordere und hintere Lager 19 und 20 auf der in Axialrichtung unbeweglichen zentralen Führungsachse 13 zwischen einer in Figur 2 gezeigten Öffnungsstellung und einer Schließstellung axial verschiebbar über eine Dichtung 21 gegenüber dem Führungsteil 5 radial abgedichtet geführt.

An der Auslassöffnung 10 des Gehäuses 1 ist ein Haltering 22 mit einer als Profildichtung ausgebildeten Abschlussdichtung 23 befestigt. Die durch den Haltering 22 fixierte Abschlussdichtung 23 liegt im Strömungsschatten und ist damit gut gegen Abrasion durch das Strömungsmedium geschützt. Durch Demontage des Halterings 22 kann die Abschlussdichtung 23 bei Bedarf aber einfach gewechselt werden.

Aus Figur 1 ist ersichtlich, dass die Antriebswelle 7 über Lagerbuchsen 24 in dem seitlich vorstehenden Antriebsflansch 6 des Gehäuses 1 drehbar gelagert ist. Die Mittelachse der Antriebswelle 7 ist gegenüber der Mittelachse der zentralen Führungsachse 13 versetzt. Über eine Stelleinrichtung ist die Antriebswelle 7 derart mit dem hülsenförmigen Führungselement 18 des Abschlusskolbens 15 gekoppelt, dass der Abschlusskolben 15 durch Drehung der Antriebswelle 7 zwischen einer in Figur 2 gezeigten Öffnungsstellung und einer Schließstellung verschoben werden kann. In Figur 1 ist der Abschlusskolben 15 in einer teilweise geschlossenen Stellung gezeigt.

Wie aus Figur 1 hervorgeht, wird die zwischen der Antriebswelle 7 und dem hülsenförmigen Führungselement 18 zur Umwandlung einer Drehung der Antriebswelle 7 in eine Axialbewegung des Abschlusskolbens 15 ausgebildete Stelleinrichtung bei der gezeigten Ausführung durch ein in den Figuren 1 und 2 gezeigtes, verdrehgesichert mit der Antriebswelle 7 verbundenes kurbelförmiges Stellelement 25 und einen im hülsenförmigen Führungselement 18 angeordneten Verbindungszapfen 26 gebildet, der in einem Langloch 27 oder einer einseitig offenen Längsnut des kurbelförmiges Stellelements 25 verschiebbar geführt ist. Bei der in Figur 1 gezeigten Ausführung ist das Stellelement 25 eine an dem inneren Ende der Antriebswelle 7 mittels einer Passfeder oder eines Mehrkantprofils verdrehfest angeordnete Einzellasche, die gemäß Figur 2 nur an einer Seite des hülsenförmigen Führungselements 18 angeordnet ist. Der Verbindungzapfen 26 ist als ein in die Seitenwand des Führungselements 18 eingeschraubter Schaft einer Schraube ausgeführt.

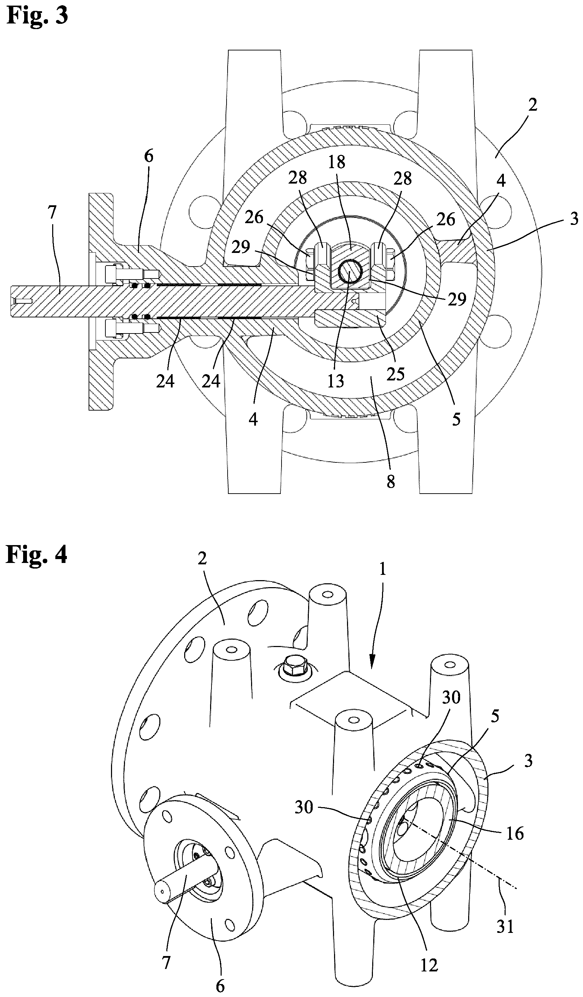

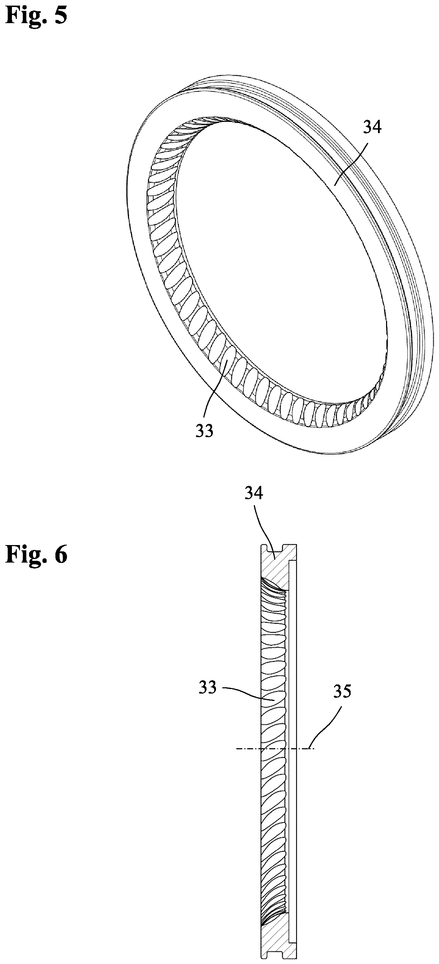

Wie aus Figur 4 hervorgeht, kann das Stellelement 25 aber auch einen U-förmigen Querschnitt mit zwei Seitenwangen 28 aufweisen. Zwischen den beiden Seitenwangen 28 des Stellelements 29 ist bei dieser alternativen Ausführung das hülsenförmige Führungselement 18 angeordnet. Hierzu weist das Führungselement 17 gemäß Figur 5 zwei gegenüberliegende Abflachungen 29 auf. Wie bei der vorherigen Ausführung wird auch hier der Verbindungzapfen 26 durch den Schaft einer Schraube gebildet, der in das Führungselement 18 eingeschraubt ist und in einem Langloch oder einer Längsnut in der Seitenwange 28 geführt ist.

In den Figuren 2 und 4 ist besonders gut erkennbar, dass an dem zur Auslassöffnung 10 des Gehäuses 1 gewandten Ende 12 des inneren Führungsteils 5 mehrere über den Umfang des Führungsteils 5 verteilte Turbulatoren 30 zur Verwirbelung des durch den Ringkanal 8 strömenden Mediums angeordnet sind. Bei der gezeigten Ausführung sind die Turbulatoren 30 als gleichmäßig über den Umfang des Führungsteils 5 verteilte Erhöhungen ausgeführt. Die Turbulatoren 30 können aber auch als Vertiefungen oder Einbuchtungen ausgebildet sein. Die Vertiefungen oder Erhöhungen können punkt- oder linsenförmig aber auch als Stege oder Nuten ausgeführt sein. Bei der in Figur 2 gezeigten Ausführung sind die Vertiefungen gegenüber einer Längsachse 31 des Gehäuses geneigt. Die Vertiefungen können aber auch parallel zu der Längsachse 31 angeordnet sein.

In Figur 2 ist besonders gut erkennbar, dass an der Auslassöffnung 10 des Gehäuses 1 weitere Turbulatoren 32 und 33 zur Erzeugung von Verwirbelungen angeordnet sind. Bei der in Figur 2 gezeigten Ausführung sind die Turbulatoren 32 an der Innenseite des Gehäuses 1 um die Auslassöffnung 10 verteilt angebracht. Die Turbulatoren 33 sind dagegen an der Innenseite eines in den Figuren 5 und 6 gezeigten Sitzrings 34 angeordnet. Aus Figur 6 ist ersichtlich, dass die Turbulatoren 33 im Sitzring 34 einen gegenüber der Mittelachse 35 des Sitzrings 34 bzw. der Mittelachse 31 des Gehäuses 1 geneigten Verlauf aufweisen. Die Turbulatoren 33 können aber auch parallel zu den Mittelachse 31 bzw. 35 verlaufen.

Bei der gezeigten Ausführung kann die Antriebswelle 7 über ein Getriebe mit Hilfe eines Handrads manuell gedreht werden. Die Drehung der Antriebswelle 7 zur Verstellung des Abschlusskolbens 15 kann aber auch elektrisch, pneumatisch oder hydraulisch erfolgen.

### Bezugszeichenliste

- 1: Gehäuse
- 2: Anschlussflansch
- 3: Außenteil
- 4: Halterippen
- 5: Innerer Führungsteil
- 6: Antriebsflansch
- 7: Antriebswelle
- 8: Ringkanal
- 9: Einlassöffnung
- 10: Auslassöffnung
- 11: Verschlussteil
- 12: Offenes Ende des inneren Führungsteils
- 13: Führungsachse
- 14: Gewinde
- 15: Abschlusskolben
- 16: Abschlussbuchse
- 17: Abschlussteil
- 18: Hülsenförmiges Führungselement
- 19: Lager
- 20: Lager
- 21: Dichtung
- 22: Haltering
- 23: Abschlussdichtung
- 24: Lagerbuchse
- 25: Stellelement
- 26: Verbindungszapfen
- 27: Langloch
- 28: Seitenwange
- 29: Abflachung
- 30: Turbulator
- 31: Mittelachse des Gehäuses
- 32: Turbulator
- 33: Turbulator
- 34: Sitzring
- 35: Mittelachse des Sitzrings

## Patentansprüche

1. Ringkolbenventil mit einem Gehäuse (1), einem zwischen einem Außenteil (3) und einem inneren Führungsteil (5) des Gehäuses (1) gebildeten Ringkanal (8) zur Führung eines Mediums zwischen einer Einlassöffnung (9) und einer Auslassöffnung (10) des Gehäuses (1), einem innerhalb des inneren Führungsteils (5) des Gehäuses (1) axial verschiebbar geführten Abschlusskolben (15) und einer mittels einer Antriebswelle (7) von der Außenseite des Gehäuses (1) betätigbaren Stelleinrichtung (25, 26), über die der Abschlusskolben (15) durch Drehung der Antriebswelle (7) zwischen einer Öffnungsstellung und einer Schließstellung axial bewegbar ist, **dadurch gekennzeichnet, dass** an der Auslassöffnung (10) des Gehäuses (1) Turbulatoren (32, 33) zur Verwirbelung des durch die Auslassöffnung (10) ausströmenden Mediums angeordnet sind.

2. Ringkolbenventil nach Anspruch 1, **dadurch gekennzeichnet, dass** die an der Auslassöffnung (10) des Gehäuses (1) angeordneten Turbulatoren (32, 33) an der Innenseite des Gehäuses (1) im Bereich der Auslassöffnung (10) und/oder an der Innenseite eines an der Auslassöffnung (10) des Gehäuses (1) angeordneten Sitzrings (34) angeordnet sind.

3. Ringkolbenventil nach Anspruch 1 oder 2, **dadurch gekennzeichnet, dass** die an der Auslassöffnung (10) des Gehäuses (1) angeordneten Turbulatoren (32, 33) als Erhöhungen oder Vertiefungen an bzw. in dem Gehäuse (1) oder als Erhöhungen oder Vertiefungen an der Innenseite des Sitzrings (34) ausgebildet sind.

4. Ringkolbenventil nach einem der Ansprüche 1 bis 3, **dadurch gekennzeichnet, dass** an der Außenseite des inneren Führungsteils (5) des Gehäuses (1) weitere Turbulatoren (30) zur Verwirbelung des durch den Ringkanal (8) strömenden Mediums angeordnet sind.

5. Ringkolbenventil nach Anspruch 4, **dadurch gekennzeichnet, dass** die an der Außenseite des inneren Führungsteils (5) des Gehäuses (1) angeordneten weiteren Turbulatoren (30) als Erhöhungen oder Vertiefungen an bzw. in dem Gehäuse (1) ausgebildet sind.

6. Ringkolbenventil nach einem der Ansprüche 1 bis 5, **dadurch gekennzeichnet, dass** die Turbulatoren (30, 32, 33) einen zur Längsachse des Gehäuses (1) parallelen Verlauf aufweisen.

7. Ringkolbenventil nach einem der Ansprüche 1 bis 5, **dadurch gekennzeichnet, dass** die Turbulatoren (30, 32, 33) gegenüber einer Längsachse (31) des Gehäuses (1) geneigt sind.

8. Ringkolbenventil nach einem der Ansprüche 1 bis 7, **dadurch gekennzeichnet, dass** die Turbulatoren (30, 32, 33) gleichmäßig über den Umfang des inneren Führungsteils (5) verteilt sind.

9. Ringkolbenventil nach einem der Ansprüche 1 bis 7, **dadurch gekennzeichnet, dass** die Turbulatoren (30, 32, 33) ungleichmäßig über den Umfang des inneren Führungsteils (5) verteilt sind.

10. Ringkolbenventil nach einem der Ansprüche 1 bis 9, **dadurch gekennzeichnet, dass** die Turbulatoren (30, 32, 33) in einer oder mehreren Reihen angeordnet sind.

11. Ringkolbenventil nach einem der Ansprüche 1 bis 10, **dadurch gekennzeichnet, dass** der Abschlusskolben (15) über ein hülsenförmiges Führungselement (18) auf einer zentralen Führungsstange (13) axial verschiebbar geführt ist.

12. Ringkolbenventil nach Anspruch 11, **dadurch gekennzeichnet, dass** die Stelleinrichtung (25, 26) zur Umwandlung der Drehbewegung der Antriebswelle (7) in eine Axialbewegung des Abschlusskolbens (15) durch ein verdrehgesichert mit der Antriebswelle (7) verbundenes kurbelförmiges Stellelement (25) und einen im hülsenförmigen Führungselement (18) angeordneten Verbindungszapfen (26) gebildet wird, der in einem Langloch (27) oder einer einseitig offenen Längsnut des kurbelförmiges Stellelements (25) verschiebbar geführt ist.

13. Ringkolbenventil nach Anspruch 11 oder 12, **dadurch gekennzeichnet, dass** die Mittelachse der Antriebswelle (7) gegenüber der Mittelachse der zentralen Führungsachse (13) versetzt ist.

14. Ringkolbenventil nach einem der Ansprüche 11 bis 13, **dadurch gekennzeichnet, dass** das hülsenförmige Führungselement (18) über ein vorderes und hinteres Lager (19, 20) auf der zentralen Führungsachse (13) verschiebbar geführt ist.
